# EUROPÄISCHE PATENTSCHRIFT

(11) **EP 2 261 601 B1**
(45) Veröffentlichungstag und Bekanntmachung des Hinweises auf die Patenterteilung: **26.06.2013**
(21) Anmeldenummer: 10009555.3
(22) Anmeldetag: 04.01.2007
(51) Int. Cl.: G01C 15/00, G01B 11/00, G01S 17/66

(54) **Koordinatenmessgerät**
Coordinate measuring device
Dispositif de mesure de coordonnées

(30) Priorität: 13.01.2006 CH 592006
(43) Veröffentlichungstag der Anmeldung: 15.12.2010
(62) Teilanmeldung aus: 07700103.0
(73) Patentinhaber: Leica Geosystems AG, 9435 Heerbrugg (CH)
(72) Erfinder: Meier, Dietrich, 5015 Niedererlinsbach (CH); Zumbrunn, Roland, 4443 Wittinsburg (CH); Jensen, Thomas, 9400 Rorschach (CH); Braunecker, Bernhard, 9445 Rebstein (CH)
(74) Vertreter: Frei Patent Attorneys

(56) Entgegenhaltungen:
- EP-A- 0 759 538
- WO-A-03/062744
- US-A1- 2003 020 895

## Beschreibung

Die Erfindung bezieht sich auf das Gebiet der Koordinatenmessgeräte, insbesondere auf ein Koordinatenmessgerät mit einer Distanzmessvorrichtung, einer Zoomkamera und einer Übersichtskamera gemäss dem Oberbegriff der entsprechenden unabhängigen Patentansprüche.

### STAND DER TECHNIK

Eine derartiges Koordinatenmessgeräte ist beispielsweise aus der WO 03/062744 A1 bekannt. Dort ist ein Gerät beschrieben, in welchem ein beweglicher Träger einzelne Komponenten von zwei Distanzmessvorrichtungen aufweist, welche mit übrigen Komponenten über faseroptische Lichtleiter verbunden ist. Dabei sind die übrigen Komponenten in einem stationären Sockel des Gerätes angeordnet. Der Träger ist um zwei Achsen drehbar, so dass also die Lichtleiter um diese zwei Achsen bewegbar sein müssen. Ferner sind auf dem Träger eine Zoomkamera und eine Übersichtskamera angeordnet. Der Strahlengang dieser Kameras ist in den Strahlengang der Distanzmesser eingekoppelt, so dass alle Strahlengänge respektive optische Achsen ausserhalb des Trägers im wesentlichen koaxial verlaufen.

US 2003/0020895 A1 zeigt einen Absolutdistanzmesser, bei welchem eine Austrittsoptik und optoelektronische Bauteile einerseits auf einer bewegten Plattform und andererseits am Sockel des Gerätes befestigt sind, und durch optische Fasern miteinander verbunden sind.

EP 0 759 538 A2 beschreibt ein Lasersystem, in welchem die Laserquelle zur thermischen Entkopplung durch eine optische Faser von den übrigen Bauteilen abgesetzt ist.

In der DE 102 35 888 A1 ist eine automatisch kollimierende Vermessungsvorrichtung mit einer Bildaufnahmevorrichtung beschrieben. Ein von der Bildaufnahmevorrichtung aufgenommenes Bild wird auf einer Anzeige angezeigt, wobei mit einer Zeigeeinrichtung ein Messpunkt auf dem Bild markiert werden kann. Die Vermessungsvorrichtung weist ein stark vergrösserndes optisches Kollimationskamerasystem auf. Die Bildaufnahmevorrichtung ist als Weitwinkelkamera aufgebaut. Der Strahlengang der Weitwinkelkamera verläuft im wesentlichen parallel zu jenem des Kollimationskamerasystems. Das Kollimationskamerasystem weist zwei Kollimationsvorrichtungen auf: einerseits eine Kollimationskamera und andererseits einen Strichkreuzsensor. Beide dienen dazu, das Kollimationskamerasystem exakt auf eine Zielmarkierung auszurichten, wobei die eine eher im Freien und die andere eher in geschlossenen Räumen eingesetzt wird. Ist das Kollimationskamerasystem ausgerichtet, wird die Distanz zur Zielmarkierung mit einem optischen Entfernungsmesser bestimmt, dessen optische Achse koaxial mit jener des Kollimationskamerasystems verläuft. Die Weitwinkelkamera wird auch als (dritte) Ersatz-Kollimationsvorrichtung betrachtet und zur groben Lokalisierung der Zielmarkierung verwendet. Sie dient somit als Übersichtskamera. Die optische Achse der Übersichtskamera und der Distanzmessvorrichtung verlaufen demnach parallel und voneinander getrennt, also nicht koaxial. Die beiden Systemelemente, welche eine hohe Präzision erfordern (Entfernungsmessung und Kollimation) sind somit koaxial angeordnet. Das Systemelement, welches weniger präzise arbeitet (die Übersichtskamera zur Groblokalisierung) ist separat und parallel dazu angeordnet, da die Korrektur der Parallaxe beim Übergang von der Groblokalisierung zur exakten Kollimation auf die Zielmarkierung keinen sehr hohen Ansprüchen genügen muss; im Gegensatz zum Übergang von der exakten Kollimation zur Entfernungsmessung.

EP 1 610 092 A1 zeigt ein Vermessungsgerät, in welchem eine Distanzmessvorrichtung kollinear zu einem Zielfernrohr angeordnet ist. Das Zielfernrohr weist keine Zoomfunktion auf. Es kann ein Bild aus dem Strahlengang des Zielfernrohres auf einen ersten Bildsensor ausgekoppelt werden. Ein zweiter Bildsensor mit einer eigenen Optik ist zum Erfassen eines Bildes mit einem 30 mal grösseren Öffnungswinkel vorgesehen. Es kann durch elektronische Umschaltung wahlweise das Bild des ersten oder des zweiten Bildsensors dargestellt werden. Es sind keine Mittel zum Verfolgen eines Messhilfsmittels offenbart, ebenso keine Zoomkamera. In einer Ausführungsform verlaufen die Strahlengänge des ersten und des zweiten Bildsensors ausserhalb des Gerätes kollinear. Dazu ist aber erforderlich, dass die gemeinsame Austrittsoptik zwei separate, konzentrische Linsensysteme aufweist, d.h. dass ein innerer Bereich der Austrittslinse(n) für die Abbildung zum einen Bildsensor geformt ist, und ein äusserer Bereich, welcher ringförmig um den inneren Bereich angeordneter ist, für die Abbildung zum anderen Bildsensor geformt ist.

### DARSTELLUNG DER ERFINDUNG

Es ist deshalb Aufgabe der Erfindung, ein Koordinatenmessgerät der eingangs genannten Art zu schaffen, welche die Genauigkeit der Messung gegenüber dem Stand der Technik verbessert.

Diese Aufgabe löst ein Koordinatenmessgerät mit den Merkmalen der entsprechenden unabhängigen Patentanspruchs.

Das Koordinatenmessgerät weist gemäss einer dem liesseren Verständnis der Erfindung dienenden Ausführungsform auf:
- mindestens eine optische **Distanzmessvorrichtung** zur Messung der Distanz zu einem im Raum bewegbaren Messhilfsmittel und mit einem ersten Mess- und Regelkreis zum Verfolgen des Messhilfsmittels,
- eine bezüglich mindestens zweier Achsen drehbare **Zoomkamera** mit einem Zoomobjektiv und einem zweiten Mess- und Regelkreis zum Konstanthalten der Grösse einer Abbildung des Messhilfsmittels auf einen optoelektrischen Bildwandler,
- eine **Übersichtskamera** zur Groblokalisierung des Messhilfsmittels,
- wobei eine Lichtaustritts- und Lichtempfangsoptik der Distanzmessvorrichtung, die Zoomkamera und die Übersichtskamera auf einem gemeinsamen, bezüglich mindestens zweier Achsen drehbaren Träger angeordnet sind,
   wobei die optische Achse der Distanzmessvorrichtung und die optische Achse der Übersichtskamera ausserhalb des Koordinatenmessgerätes koaxial verlaufen.

Damit ist es möglich, eine insgesamt besonders Platz sparende Anordnung der optischen Komponenten auf dem Träger zu erzielen.

Die mindestens eine Distanzmessvorrichtung ist vorzugsweise ein interferometrisches Messgerät, ein laserstrahlbasierter Absolutwertdistanzmesser, oder eine Kombination von beiden. Die Lichtaustritts- und Lichtempfangsoptik der Distanzmessvorrichtung sowie übrige Elemente der Distanzmessvorrichtung sind also im Träger und mit diesem bewegt angeordnet. Es wird mindestens ein kollimierter Lichtstrahl zur Messung der Distanz zum Messhilfsmittel erzeugt. Bei einer Bewegung des Messhilfsmittels wird die Verschiebung des reflektierten Lichtstrahls mit einer Kamera oder einem positionsempfindlichen Detektor erfasst und durch den ersten Mess- und Regelkreis der Träger zur Verfolgung des Messhilfsmittels bewegt.

Vorzugsweise ist dabei im Strahlengang eines empfangenen Lichtbündels zuerst eine erste Auskopplung von Licht zur Übersichtskamera angeordnet. Damit ist die Übersichtskamera so nah wie möglich bei der Austrittsöffnung der Optik und kann so einen grossen Öffnungswinkel aufweisen. Die Übersichtskamera weist, ihrem Zweck entsprechend. einen grösseren Öffnungswinkel als die Zoomkamera auf. Typischerweise ist der Öffnungswinkel der Übersichtskamera 10° oder grösser. und ist der Öffnungswinkel der Zoomkamera zwischen beispielsweise 1° und 10° in Abhängigkeit der Entfernung zum Messhilfsmittel variierbar (z.B. 15 m Entfernung bei 1° und 1.5 m Entfernung bei 10°).

Vorzugsweise ist anschliessend eine zweite Auskopplung von Licht zu einem Sensor angeordnet, welcher Sensor eine Messgrösse zum Verfolgen des Messhilfsmittels liefert. Diese zweite Auskopplung ist im Strahl des von der ersten Auskopplung nicht ausgekoppelten, also durchgehenden Lichtanteils angeordnet. Dieser Sensor ist ein Positionswandler, welcher eine Position eines Lichtflecks auf einer Fläche des Wandlers erfasst. In einer alternativen Ausführungsform liefert anstelle des Positionswandlers die Übersichtskamera diese Messgrösse zum Verfolgen des Messhilfsmittels.

Vorzugsweise sind die erste und die zweite Auskopplung um die Achse des empfangenen Lichtes um zumindest annähernd 90° gegeneinander verdreht. Dadurch werden Asymmetrien, die das durchgehende Licht durch den Spiegel der ersten Auskopplung erhält, durch den dazu verdrehten Spiegel der zweiten Auskopplung wieder kompensiert.

In einer dem liesseren Vertändnis der Erfindung dienenden Ausführungsform sind der Strahlengang der Zoomkamera und der Distanzmessvorrichtung über jeweils eine separate Austrittsoptik geführt, also biaxial. In anderen Worten: die optische Achse der Zoomkamera und der Strahlengang der Distanzmessvorrichtung verlaufen im Bereich zwischen dem Koordinatenmessgerät und dem Messhilfsmittel nicht koaxial. Damit muss zwar die Distanz zwischen diesen Strahlverläufen bei der Auswertung und Koordination von Daten der Zoomkamera und Daten der übrigen Sensoren berücksichtigt werden, dafür ist der optische Aufbau vereinfacht.

In einer anderen dem liesseren Vertändnis der Erfindung dienenden Ausführungsform verläuft die optische Achse der Zoomkamera ausserhalb des Koordinatenmessgerätes ebenfalls koaxial zu den optischen Achsen der Distanzmessvorrichtung und der Übersichtskamera. Hier ist somit der optische Aufbau aufwendiger, dafür ist die Auswertung einfacher. Dazu ist vorzugsweise eine dritte Auskopplung im Strahlengang des von der ersten Auskopplung ausgekoppelten Lichtes angeordnet. Diese dritte Auskopplung ist somit zum Auskoppeln von Licht zur Zoomkamera angeordnet.

Dabei sind die verschiedenen Kameras respektive Distanzmesser gleichzeitig betreibbar. Dies steht im Gegensatz zu Anordnungen, bei denen eine Umlenkung des Lichtes über einen klappbaren Spiegel erfolgt, und in denen somit einzelne Messeinrichtungen nur abwechselnd und einander ausschliessend betreibbar sind.

Vorzugsweise ist mindestens eine der Auskopplungen ein wellenlängenabhängiger Strahlteiler. Das heisst, dass die verschiedenen Kameras und Distanzmessvorrichtungen sowie die Positionsdetektion zumindest teilweise in unterschiedlichen Wellenlängenbereichen arbeiten. Damit ist es möglich, die gegenseitige Beeinflussung dieser Messmittel zu minimieren. Ferner wird ermöglicht, dass in einem bestimmten Wellenlängenbereich der grösste Teil der empfangenen Lichtenergie den zugeordneten Detektor erreicht.

In einer weiteren dem liesseren Vertändnis der Erfindung dienenden Ausführungsform der Erfindung ist ein elektrooptischer Bildwandler der Zoomkamera bezüglich der optischen Achse der Zoomkamera asymmetrisch angeordnet, und ist der Mittelpunkt des Bildwandlers von der optischen Achse der Distanzmessvorrichtung weg verschoben.

Das erfindungsgemässe Koordinatenmessgerät weist vorzugsweise auf
- mindestens eine optische Distanzmessvorrichtung,
- Mittel zum Abstrahlen und zum Empfang von Licht,
- eine Sende-Empfangseinheit, welche bezüglich einer Zwischeneinheit oder einem Träger um eine Achse, beispielsweise eine Azimutachse, drehbar angeordnet ist,
- eine Zwischeneinheit, welche bezüglich einer Basiseinheit um eine weitere Achse beispielsweise eine Zenitachse, welche nicht parallel zur ersten Achse verläuft, drehbar angeordnet ist, wodurch die Sende-Empfangseinheit bezüglich der Basiseinheit um zwei Achsen drehbar angeordnet ist,
- wobei die optische Distanzmessvorrichtung eine erste Untereinheit aufweist, welche auf der Sende-Empfangseinheit und mit dieser bewegt angeordnet ist,
- die optische Distanzmessvorrichtung eine zweite Untereinheit aufweist, und mindestens ein Lichtleiter zur Übertragung von Licht zwischen der ersten und der zweiten Untereinheit der Distanzmessvorrichtung angeordnet ist
   wobei die zweite Untereinheit auf der Zwischeneinheit und mit dieser bewegt angeordnet ist.

Damit müssen der oder die Lichtleiter zwischen den Untereinheiten nur über eine einzige bewegte Achse geführt werden.

In einer weiteren Ausführungsform der Erfindung ist die zweite Untereinheit eines ersten Distanzmessers auf der Zwischeneinheit und die zweite Untereinheit eines zweiten Distanzmessers in der Basiseinheit angeordnet. Die zweite Untereinheit umfasst, je nach Typ des Distanzmessers, eines oder mehrere der folgenden Elemente: Laserlichtquelle, Modulator, Strahlteiler, Isolator, Detektor, Einkopplung in Lichtleiter etc.

In einer bevorzugten Ausführungsform der Erfindung ist mindestens ein optoelektronischer Detektor der mindestens einen Distanzmessvorrichtung in der Sende-Empfangseinheit angeordnet. Damit ist es möglich, temperaturbedingte Längenänderungen in einem ersten Lichtleiter (mit beispielsweise einem Messstrahl) durch analoge Längenänderungen in einer zweiten Lichtleiter (mit beispielsweise einem Referenzstrahl) zu kompensieren.

In einer weiteren bevorzugten Ausführungsform der Erfindung sind ein abgestrahlter und ein rückkehrender Lichtstrahl der mindestens einen Distanzmessvorrichtung durch denselben Lichtleiter zwischen der ersten und der zweiten Untereinheit geführt. Dadurch ist eine besonders einfache Führung der Faser möglich.

In einer anderen bevorzugten Ausführungsform der Erfindung sind ein abgestrahlter und ein rückkehrender Lichtstrahl der mindestens einen Distanzmessvorrichtung durch getrennte Lichtleiter zwischen der ersten und der zweiten Untereinheit geführt. Auch mit einer solchen Anordnung können Längenänderungen von Lichtleitern kompensiert werden.

Eine weitere bevorzugte Ausführungsform der Erfindung weist eine erste und eine zweite Distanzmessvorrichtung auf. Dabei sind Lichtstrahlen der beiden Distanzmessvorrichtungen jeweils durch getrennte Lichtleiter zwischen der ersten und der zweiten Untereinheit geführt. Damit lassen sich die Lichtstrahlen getrennt verarbeiten und die Distanzmessvorrichtungen können in der Zwischeneinheit räumlich unabhängig voneinander angeordnet werden. Diese Ausführungsform umfasst sowohl Varianten bei welchen die einzelnen Distanzmesser jeweils eine oder jeweils zwei Lichtleiter aufweisen.

Eine weitere bevorzugte Ausführungsform der Erfindung weist eine erste und eine zweite Distanzmessvorrichtung mit jeweils einem abgestrahlten und einem rückkehrenden Lichtstrahl auf. Dabei ist mindestens einer der Lichtstrahlen der ersten Distanzmessvorrichtung und einer der Lichtstrahlen der zweiten Distanzmessvorrichtung durch denselben Lichtleiter zwischen der ersten und der zweiten Untereinheit geführt. Damit ist es einerseits möglich, eine Kompensation mittels parallel verlaufender, doppelter Lichtleiter für mindestens einen der Distanzmesser zu erzielen, und andererseits die Anzahl Lichtleiter durch Doppelnutzung für die beiden Distanzmesser zu verkleinern.

Eine weitere bevorzugte Ausführungsform der Erfindung weist eine erste und eine zweite Distanzmessvorrichtung mit jeweils einem abgestrahlten und einem rückkehrenden Lichtstrahl auf. Dabei sind alle Lichtstrahlen der ersten wie auch der zweiten Distanzmessvorrichtung durch denselben Lichtleiter zwischen der ersten und der zweiten Untereinheit geführt. Damit ist die Anzahl der Lichtleiter minimal. Zur Kompensation von Temperaturschwankungen weist der Lichtleiter vorzugsweise eine integrierte Temperaturmessung auf, beispielsweise mittels eines parallel und nahe zum Lichtleiter verlaufenden Widerstanddrahtes.

In einer weiteren bevorzugten Ausführungsform der Erfindung ist eine Lichtquelle in der Zwischeneinheit angeordnet und bildet die zweite Untereinheit. Die übrigen Elemente der mindestens einen Distanzmessvorrichtung bilden somit die erste Untereinheit und sind in der Sende-Empfangseinheit angeordnet.

In weiteren bevorzugten Ausführungsformen der Erfindung sind einzelne Untereinheiten der mindestens einen Distanzmessvorrichtung auch auf der Basiseinheit angeordnet. Beispielsweise sind drei Untereinheiten einer Distanzmessvorrichtung so verteilt, dass eine Ausgangsoptik auf der Sende-Empfangseinheit, eine Detektoreinheit auf der Zwischeneinheit und eine Lichtquelle auf der Basiseinheit angeordnet ist. Oder es ist eine Lichtquelle und eine Detektoreinheit eines ersten Distanzmessers auf der Zwischeneinheit, und eine Lichtquelle und eine Detektoreinheit eines zweiten Distanzmessers auf der Basiseinheit angeordnet. Grundsätzlich lassen sich also Untereinheiten mit unterschiedlicher Funktionalität über die Sende-Empfangseinheit, die Zwischeneinheit und die Basiseinheit verteilen, um eine optimale Kombination von optischen, wärmetechnischen und mechanischen Eigenschaften zu erhalten.

In einer bevorzugten Ausführungsform der Erfindung ist in der Sende-Empfangseinheit eine lambda/4-Platte oder Viertelwellenplatte im Strahlengang des abgestrahlten wie auch des rückkehrende Lichtes von mindestens einem der mindestens zwei Distanzmesser angeordnet. Damit geschieht eine Verdrehung des ausgesendeten Lichtes gegenüber dem empfangenen Licht in dem oder den Lichtleitern, wodurch polarisationsabhängige Verzögerungen und andere Asymmetrien der Lichtleiter und weiterer optischer Elemente ausgeglichen werden. Deshalb ist die Viertelwellenplatte möglichst nahe bei der Lichtaustrittsoptik angebracht.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausrührungsbeispielen, welche in den beiliegenden Zeichnungen dargestellt sind, näher erläutert. Es zeigen jeweils schematisch:
- Figur 1: eine Koordinatenmessgerät;
- Figur 2: eine Anordnung mit einer separierten Laserlichtquelle;
- Figur 3: eine Reflexionscharakteristik von darin eingesetzten Auskopplungen;
- Figur 4: eine Anordnung mit über einem Lichtleiter separierten Distanzmessern;
- Figur 5: eine Reflexionscharakteristik von darin eingesetzten Auskopplungen;
- Figur 6: eine Anordnung mit über zwei Lichtleitern separierten Distanzmessern;
- Figur 7: eine Anordnung mit einem über zwei Lichtleiter teilweise separierten interferometrischen Distanzmesser;
- Figur 8: eine Anordnung mit einem über einen Lichtleiter separierten Absolutdistanzmesser;
- Figur 9: eine Kombination der Anordnungen aus den Figuren 7 und 8;
- Figur 10: eine Kombination der Anordnungen aus den Figuren 7 und 8 mit mehrfacher Nutzung eines der Lichtleiter;
- Figur 11: eine weitere Anordnung mit einem über zwei Lichtleiter teilweise separierten interferometrischen Distanzmesser;
- Figur 12: eine Anordnung mit einem über zwei Lichtleiter teilweise separierten Absolutdistanzmesser; und
- Figuren 13 und 14: weitere Anordnungen von Distanzmessern, die in Untereinheiten separiert sind.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

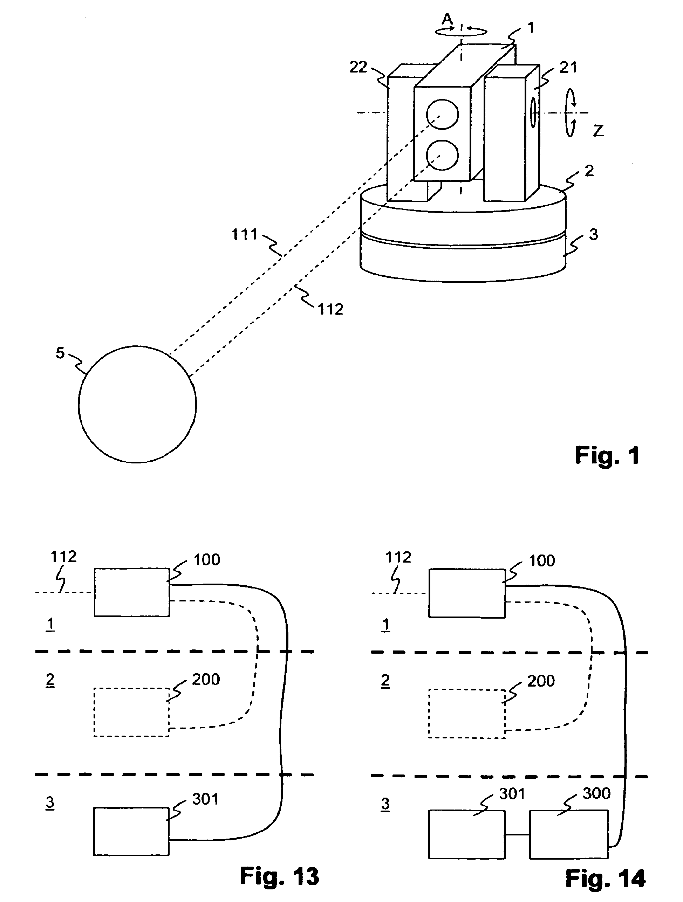

**Figur 1** zeigt schematisch einen Aufbau eines Koordinatenmessgerätes, aufweisend eine um zwei Achsen bewegbare Sende-Empfangseinheit 1, eine um eine Achse bewegbare Zwischeneinheit 2 und eine Basiseinheit 3. Die Zwischeneinheit 2 ist bezüglich der Basiseinheit 3 um eine vertikale oder Azimutachse A drehbar, die Sende-Empfangseinheit 1 ist bezüglich der Zwischeneinheit 2 um eine horizontale Zenitachse oder Elevationsachse Z drehbar. Dabei weist die Zwischeneinheit 2 eine erste Stütze 21 und eine zweite Stütze auf, in denen die Sende-Empfangseinheit 1 links und rechts gelagert ist. Die Erfindung kann aber auch in einer Anordnung mit einer einseitigen Lagerung der Sende-Empfangseinheit 1 über nur eine Stütze realisiert werden.

Auf der Sende-Empfangseinheit 1 sind optische Elemente für den Lichtaustritt und Lichtempfang von verschiedenen Messkameras und Distanzmessern des Gerätes angeordnet. Diese optischen Elemente werden gemeinsam mit der Sende-Empfangseinheit 1 bewegt und durch Regeleinrichtungen nach Massgabe des empfangenen Lichtes auf ein Ziel oder Messhilfsmittel 5 gerichtet und diesem automatisch nachgeführt. Aus der gemessenen Drehung der Sende-Empfangseinheit 1 um die Azimutachse A und die Zenitachse Z sowie aus der Distanz zum Ziel 5 wird in bekannter Weise die Position des Zieles 5 bestimmt. Mit einer Zoomkamera 106 werden Markierungen am Ziel 5 erfasst und daraus in bekannter Weise die räumliche Orientierung des Zieles 5 bestimmt, also die Orientierung um die drei Koordinatenachsen.

Im folgenden werden verschiedene Anordnungen beschrieben, welche sich einerseits in der Anordnung der Messkameras auf der Sende-Empfangseinheit 1 sowie andererseits in der Aufteilung der Distanzmesser auf die Sende-Empfangseinheit 1 und die Zwischeneinheit 2 unterscheiden. Weitere Kombinationen von Kameraanordnungen mit Distanzmesseranordnungen, die ebenfalls unter die Erfindung fallen, folgen daraus ohne weiteres.

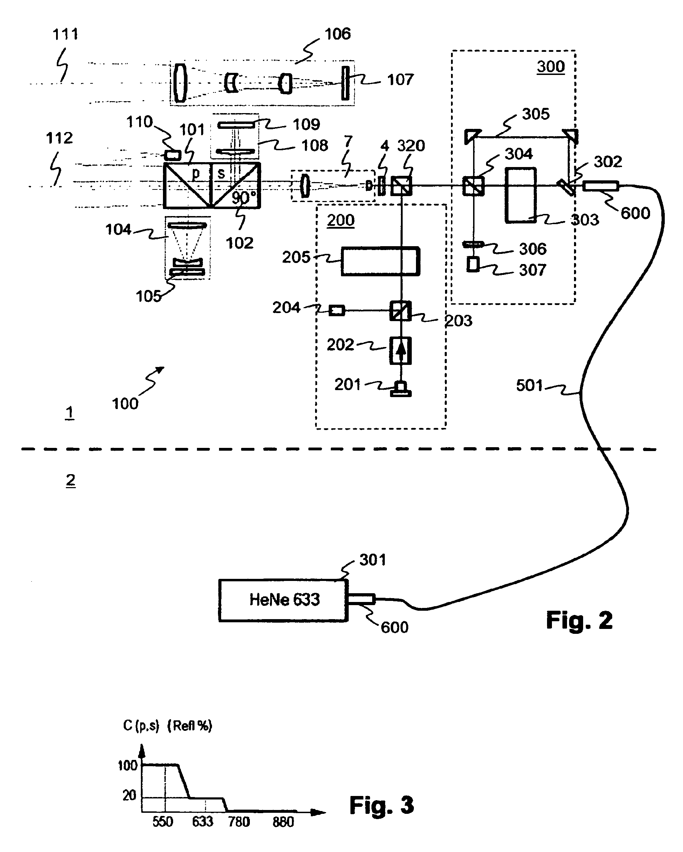

**Figur 2** zeigt eine Anordnung mit einer separierten Laserlichtquelle 301. Diese Anordnung weist eine Träger-Anordnung 100 auf, auf welcher verschiedene Kameras 104, 106, ein Positionswandler 108, eine Absolutdistanzmesser (ADM)-Anordnung 200 und eine Interferometeranordnung 300 angeordnet sind und mit der Träger-Anordnung 100 mitbewegt werden. Nicht mit der Träger-Anordnung 100 mitbewegt, sondern über einen Lichtleiter 503 abgesetzt ist ein HeNe-Laser 301 für die Interferometeranordnung 300. Der HeNe-Laser 301 ist auf der Zwischeneinheit 2 angeordnet.

Die Träger-Anordnung 100 weist eine erste Auskopplung 101 auf, welche Licht, das entlang einer optischen Achse 112 der Distanzmesser von aussen in die Träger-Anordnung 100 einfällt, auftrennt. Ein Teil dieses Lichtes wird zu einer Übersichtskamera 104 ausgekoppelt. Die Übersichtskamera 104 weist eine eigene Optik und einen Bildwandler 105 auf. Die Übersichtskamera 104 weist typischerweise einen Öffnungswinkel von rund 10 Grad und eine Brennweite von beispielsweise 30 - 50 mm auf und dient zur Groblokalisierung von Messzielen 5. Zur Erfassung von reflektierenden Zielen 5 weist die Träger-Anordnung 100 vorzugsweise eine Reflektorbeleuchtung 110 auf, welche einen Winkelbereich beleuchtet, der vorzugsweise mindestens so gross ist, wie der Öffnungswinkel der Übersichtskamera 104. Der Durchmesser der Auskopplungen 101, 102, 103 beträgt beispielsweise rund 20-25 mm.

Eine Auswertungselektronik und/oder Auswertungssoftware der Übersichtskamera 104 erfasst beispielsweise einen oder mehrere besonders helle Lichtpunkte im Sichtbereich der Übersichtskamera 104, welche somit jeweils einem reflektierenden Ziel 5 entsprechen. Daraus wird deren Position im Bild der Übersichtskamera 104 ermittelt und daraus wiederum eine Änderung der Achspositionen, welche die Träger-Anordnung 100 und die Lichtstrahlen des oder der Distanzmesser auf das Ziel 5 ausrichten. Damit ist also eine automatische Zielerfassung und ein "Lock-on" der Distanzmesser auf ein Ziel 5 möglich.

Das durch die erste Auskopplung 101 nicht ausgekoppelte Licht erreicht eine zweite Auskopplung 102, welche einen Teil des Lichtes zu einem Positionswandler 108 auskoppelt. Dieser Lichtanteil ist ein Strahlenbündel von zurückkehrendem Licht eines der Distanzmesser 200, 300, vorzugsweise von der Interferometeranordnung 300. Der Positionswandler 108 weist eine eigene Optik und beispielsweise eine positionsempfmdliche Diode 109 auf. Diese liefert analoge Signale, welche die Position des Strahlenbündels in zwei Dimensionen auf einer Fläche der positionsempfindlichen Diode 109 repräsentieren. Alternativ dazu können auch Sensorarrays oder Bildwandler (CCD, CMOS, etc.) mit einer zugeordneten digitalen Signalverarbeitung zur Positionsbestimmung verwendet werden. Ein Tracking-Regler regelt entsprechend der so ermittelten Position eine Verschiebung der Stellung der Sende-Empfangseinheit 1, so dass der Lichtstrahl einer Bewegung des reflektierenden Ziel 5 folgt.

Die räumliche Anordnung der ersten Auskopplung 101 und der zweiten Auskopplung 102 ist in der Figur nur schematisch dargestellt. Die Orientierung der Lichteinfallsebene des durch die erste Auskopplung 101 ausgekoppelten Lichtes verläuft tatsächlich parallel ("p") zur Ebene der Zeichnung. Die Orientierung der Lichteinfallsebene des durch die zweite Auskopplung 102 ausgekoppelten Lichtes verläuft jedoch senkrecht ("s") zur Ebene der Zeichnung, und ist nur zum Zwecke der Darstellung in die Ebene hineingeklappt. Der Einfluss der ersten Auskopplung 101 auf die Messtrahlen, der eine Asymmetrie im Messtrahl hervorruft, wird durch den Einfluss der zweiten Auskopplung 102 kompensiert. Die Asymmetrie ist eine Phasenverschiebung zwischen der vertikal und der horizontal polarisierten Komponente des Lichtes.

Eine **Zoomkamera** 106 ist ebenfalls als Teil der Träger-Anordnung 100 auf der Sende-Empfangseinheit 1 angeordnet. Die Zoomkamera 106 weist eine eigene Lichteintrittsoptik auf, und damit eine eigene optische Achse 111, welche ausserhalb der Sende-Empfangseinheit 1 nicht mit der optischen Achse 112 der bisher beschriebenen Elemente zusammenfällt, sondern vorzugsweise im wesentlichen parallel zu dieser verläuft. Diese Anordnung wird im Folgenden als biaxiale Anordnung bezeichnet. Die Zoomkamera 106 erfasst Markierungen eines Zieles 5 auf einem Bildwandler 107. Aufgrund der Abbildung der Markierungen wird in bekannter Weise die Orientierung des Zieles 5 ermittelt, und wird zudem der Zoomfaktor der Zoomkamera 106 gesteuert, so dass die Abbildung des Zieles 5 auf den Bildwandler 107 im wesentlichen stets dieselbe Grösse aufweist. Beispielsweise weist die Zoomkamera 106 ein 10fach-Zoom mit einer Brennweite von 50 bis 500 mm Vergrösserung auf.

In einer Ausführungsform ist der Strahlengang der Zoomkamera 106 parallel zum Strahlengang der Distanzmesser 200, 300 ausserhalb der Sende-Empfangseinheit 1. Wenn das Ziel 5 erfasst und verfolgt wird, ist der Lichtstrahl der Distanzmesser 200, 300 dauernd auf einen Reflektor des Zieles 5 ausgerichtet. Dabei sind vom Ziel in der Regel besondere, reflektierende oder selbstleuchtende Markierungspunkte sichtbar, und die Abbildung dieser Markierungspunkte erlaubt die Bestimmung der Orientierung des Zieles 5. Von der Zoomkamera 106 aus gesehen ist also das Ziel 5 immer um den Abstand der parallelen Strahlengänge 111, 112 verschoben. Zudem hält die Zoomautomatik die Grösse der Abbildung des Zieles 5 konstant. Deshalb ist die Abbildung des Zieles 5 auf den Bildwandler 107 der Zoomkamera 106 immer um dieselbe Distanz bezüglich der optischen Achse 111 verschoben. Deshalb ist vorzugsweise auch der Bildwandler 107 bezüglich der optischen Achse 111 der Zoomkamera 106 verschoben angeordnet. Die optische Achse 111 führt also nicht durch die Mitte des Bildwandlers 107. Damit wird der Bildwandler 107 optimal genutzt und kann die Auswertung der Bilddaten effizienter geschehen. Alternativ ist es auch möglich, den Bildwandler 107 zwar nicht verschoben anzuordnen, aber einen Streifen der Bildpunkte, der auf der Seite des Distanzmesserstrahls liegt, nicht auszulesen oder in der Bildverarbeitung nicht zu berücksichtigen.

Die Messmittel wie die Übersichtskamera 104, die Zoomkamera 106, der Positionswandler 108 und die beiden Distanzmesser 200, 300 arbeiten vorzugsweise mit unterschiedlichen Wellenlängenbereichen. **Figur 3** zeigt dem entsprechend schematisch eine Reflektionscharakteristik C(s, p) von Auskopplungen, wie sie in der Anordnung gemäss Figur 1 eingesetzt werden. Die horizontale Achse gibt die Wellenlänge an, der Anteil R von reflektiertem Licht in Prozent ist entlang der vertikalen Achse aufgetragen. Die erste Auskopplung 101 reflektiert, das heisst koppelt aus, vorzugsweise den ganzen Anteil von eingehendem Licht im Wellenlängenbereich von 550 nm und darunter. Die Übersichtskamera 104 ist zum Betrieb in einem Bereich um 550 nm optimiert. Deshalb strahlt auch die Reflektorbeleuchtung 110 vorzugsweise hauptsächlich Licht in diesem Bereich ab. Die zweite Auskopplung 102 koppelt einen Teil, beispielsweise rund 20%, von Licht um 633 nm aus. Dies ist der Bereich, in welchem vorzugsweise die Interferometeranordnung 300 arbeitet. Damit erhält einerseits die Interferometeranordnung 300 den Hauptteil des zurückkehrenden Lichtes, andererseits erhält der Positionswandler 108 einen begrenzten und gut definierten Lichtstrahl als Basis für die Nachführung der Sende-Empfangseinheit 1. Die Figur 3 stellt einen idealen Kurvenverlauf dar; ein praktisch realisierter Verlauf wird bei den verwendeten Wellenlängen im Wesentlichen den Vorgaben entsprechen, und bei anderen Wellenlängen davon abweichen. Wie schon oben erwähnt sind die erste Auskopplung 101 und die zweite Auskopplung 102 in Strahlrichtung gesehen gegeneinander verdreht, dass also die Achsen der ausgekoppelten Lichtanteile senkrecht zueinander stehen, respektive senkrecht (s) und parallel (p) zur Zeichnungsebene. Es sind also auch die selektiv durchlässigen Spiegel der beiden Auskopplungen gegeneinander um 90° verdreht angeordnet. Dadurch kompensiert sich die Wirkung der beiden Spiegel auf die unterschiedlich polarisierten Komponenten des transmittierten respektive nicht ausgekoppelten Lichtes.

Das durch die zweite Auskopplung 102 nicht ausgekoppelte Licht wird zu den **Distanzmessern** 200, 300 geleitet. Vorzugsweise wird es zuerst über eine Strahlaufweitungs- respektive Konzentrationsoptik 7 und anschliessend durch eine lambda/4-Platte oder Viertelwellenplatte 4 geführt. Die optische Achse der Viertelwellenplatte 4 ist um 45 Grad bezüglich der C-Achse des Kristalls des elektrooptischen Modulators 205 und der Ausgangspolarisation der Interferometeranordnung 300 Lichtes verdreht. Sie beeinflusst nur die Wellenlänge der ADM-Anordnung 200 genau, und hat leichte Signalverluste bei der Wellenlänge der Interferometeranordnung 300 zur Folge. Alternativ kann auch eine breitbandig wirkende Viertelwellenplatte 4 eingesetzt werden, welche auf beide Wellenlängen in möglichst idealer Weise wirkt. In einer weiteren Ausführungsform ist die Viertelwellenplatte 4 entlang des Strahlverlaufes weiter gegen die Auskopplungen hin oder ausserhalb der Auskopplungen angeordnet. Dadurch werden auch bestimmte Asymmetrien in den Auskopplungen kompensiert, jedoch muss dazu die Viertelwellenplatte 4 grösser sein.

Anschliessend an die Viertelwellenplatte 4 wird das Licht durch einen wellenlängenabhängigen Strahlteiler 320 in die Anteile der ADM-Anordnung 200 und der Interferometeranordnung 300 aufgeteilt. Beispielsweise arbeitet die ADM-Anordnung 200 mit einer Wellenlänge von 780 nm und die Interferometeranordnung 300 mit einer Wellenlänge von 633 nm.

Die **ADM-Anordnung** 200 weist eine Laserdiode 201 zur Erzeugung eines Messlichtstrahls auf. Der davon ausgehende Lichtstrahl wird durch einen Isolator 202 zum Abschirmen von rückkehrendem Licht auf einen polarisierenden Strahlteiler 203 und von dort durch einen elektrooptischen Modulator 205 zum wellenlängenabhängigen Strahlteiler 320 geführt. Über den wellenlängenabhängigen Strahlteiler 320 gelangt der ausgehende Lichtstrahl über die vorher beschriebenen Elemente in umgekehrter Folge zum Ziel 5 und wird dort reflektiert. Das rückkehrende Licht wird in der ADM-Anordnung 200 durch den polarisierenden Strahlteiler 203 auf einen ADM-Detektor 204 geführt. Die Wirkungsweise einer solchen ADM-Anordnung 200 ist grundsätzlich bekannt. Es sind auch andere ADM-Anordnungen und Verfahren verwendbar, bei denen sich der Messlichtstrahl durch beispielsweise den wellenlängenabhängigen Strahlteiler 320 ein- und auskoppeln lässt. Ein Beispiel für einen solchen ADM ist in der WO 03/062744 A1 detailliert beschrieben. Grundsätzlich sind hier wie in den anderen Ausführungsformen der Erfindung auch andere Typen von ADM wie Phasenmesser einsetzbar.

Die **Interferometeranordnung** 300 verwendet Licht eines HeNe-Lasers 301, der in dieser Ausführungsform der Erfindung nicht auf der Sende-Empfangseinheit 1, sondern in der Zwischeneinheit 2 angeordnet ist. Das Licht des HeNe-Lasers 301 wird über einen Lichtleiter 501 zu der Interferometeranordnung 300 geführt. Dabei sind an den Enden des Lichtleiters 501 jeweils Kollimatoren 600 in bekannter Weise angeordnet. Entweder sind die Kollimatoren 600 als Teil des Abschlusses der Lichtleiter ausgeführt, beispielsweise als Grin(graded-index) Kollimatoren, mit einem Ausgangsstrahl von beispielsweise ca. 0.5 mm Durchmesser. Alternativ kann eine Linse zur Kollimierung respektive als Strahlformer vor dem Ende eines Lichtleiters angeordnet sein, für einen Ausgangsstrahl von beispielsweise ca. 5 mm Durchmesser.

Das aus dem Lichtleiter 501 austretende Licht wird durch einen Strahlteiler 302 in einen Referenzlichtpfad 305 und einen Messlichtpfad aufgeteilt. Der Messlichtpfad führt durch einen akustooptischen Modulator 303 und trifft zusammen mit dem Referenzlichtpfad auf einen polarisierenden Strahlteiler 304. Der polarisierende Strahlteiler 304 leitet das Messlicht weiter zum wellenlängenabhängigen Strahlteiler 320, und lenkt das rückkehrende Messlicht zusammen mit dem Referenzlicht über ein Polarisationsfilter 306 zur Erzeugung der sich interferierenden Polarisationskomponenten unter 45° zu einem Interferometer-Detektor 307. Die Wirkungsweise einer solchen Interferometeranordnung 300 ist grundsätzlich bekannt. Es sind auch andere Interferometeranordnungen und Verfahren verwendbar, bei denen sich der Messlichtstrahl durch beispielsweise den wellenlängenabhängigen Strahlteiler 320 ein- und auskoppeln lässt. Ein Beispiel für ein solches Interferometer ist in der WO 03/062744 A1 detailliert beschrieben. Das beschriebene Prinzip ist das eines Heterodyne-Interferometers. Grundsätzlich sind hier wir in den anderen Ausführungsformen der Erfindung auch andere Typen von Interferometern (Michelson mit Quadraturdetektion, Zeeman-Split) einsetzbar.

In weiteren, nicht im Detail beschriebenen Varianten dieser wie auch der weiteren Ausführungsformen ist nur eine der beiden Distanzmessvorrichtungen 200, 300 vorhanden.

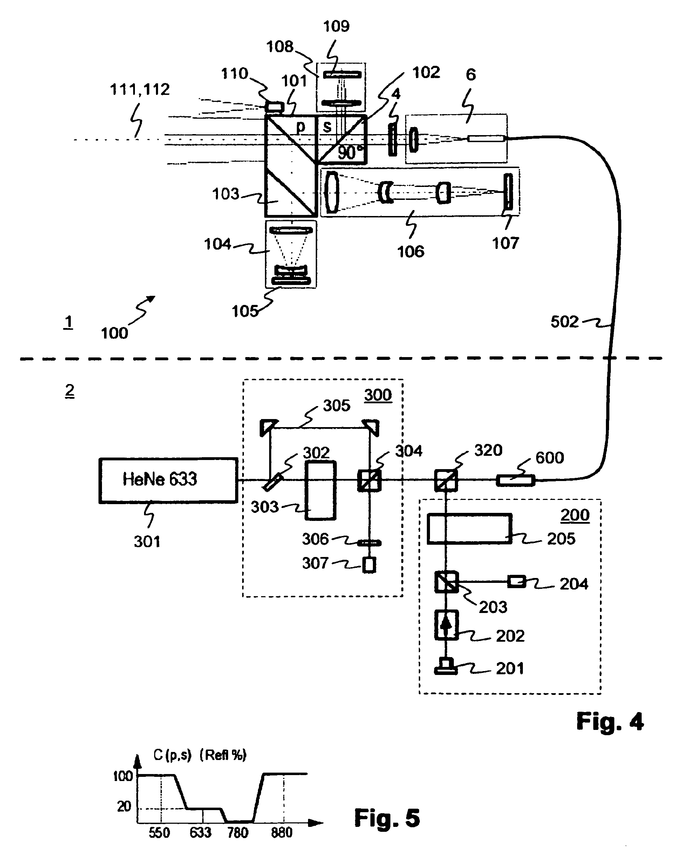

**Figur 4** zeigt eine Anordnung mit über genau einem Lichtleiter separierten Distanzmessern 200. 300. Zudem ist in dieser Anordnung der Strahlengang 111 der Zoomkamera 106 im Bereich zwischen der Träger-Anordnung 100 und dem Ziel 5 koaxial mit dem Strahlengang 112 der Distanzmesser 200, 300. Im Folgenden werden nur die Unterschiede zur vorangehenden Ausführungsform gemäss **Figur 2** erklärt, die übrigen Elemente weisen dieselbe prinzipielle Struktur und Funktion auf:
Das einfallende Licht, welches durch die erste Auskopplung 101 abgetrennt wird, wird nach dieser ersten Auskopplung 101 durch eine dritte Auskopplung 103 noch einmal aufgetrennt und auf die Übersichtskamera 104 und die Zoomkamera 106 aufgeteilt. Vorzugsweise sind diese beiden Kameras auf eine Funktion in jeweils unterschiedlichen Wellenlängenbereichen optimiert.

In einer Variante der Ausführungsform gemäss **Figur 4** sind die ADM-Anordnung 200, der HeNe-Laser 301 und die Interferometeranordnung 300 auf der Basiseinheit 3 anstelle der Zwischeneinheit 2 angeordnet, und über den gemeinsam genutzten Lichtleiter 502 optisch miteinander verbunden.

**Figur 5** zeigt eine Reflektionscharakteristik der darin eingesetzten Auskopplungen: Im Unterschied zur vorangehenden Ausfühnzngsform koppelt die erste Auskopplung 101 nebst Wellenlängenbereichen um 550 nm auch solche um 880 nm und darüber aus. Die dritte Auskopplung 103 trennt diese voneinander und leiten jene um 880 nm zu der Zoomkamera 106, und jene um 550 nm zu der Übersichtskamera 104.

Die Messlichtanteile der Distanzmesser 200, 300 werden nach der zweiten Auskopplung 102 durch eine Viertelwellenplatte 4 und einen Strahlformer 6 in einen Lichtleiter 502 geleitet, durch welche umgekehrt auch die von den Distanzmessern 200, 300 ausgestrahlten Messstrahlen hinausgeführt werden. Der Strahlformer 6 weitet den Messlichtstrahl auf 4 - 5 mm auf und ist beispielsweise anstelle eines Grin-Kollimators eingesetzt.

Der Lichtleiter 502 überträgt die Polarisationskomponenten unabhängig voneinander, ist also polarisationserhaltend. Ein solcher Lichtleiter weist eine bevorzugte Achse oder Hauptachse (deren Orientierung durch Projektion auf eine Ebene senkrecht zur Faserrichtung definiert ist) auf, entlang welcher das Licht polarisiert sein muss, um gleich polarisiert übertragen zu werden. Es zeigt sich, dass diese Polarisationserhaltung auch für eine Polarisationsrichtung senkrecht zu dieser Hauptachse stattfindet.

Die bisher beschriebenen Elemente dieser Ausführungsform sind in der Sende-Empfangseinheit 1 und mit dieser bewegbar angeordnet. Der Lichtleiter 502 führt zu den verbleibenden Elementen, welche auf der Zwischeneinheit 2 und mit dieser bewegbar angeordnet sind. Diese verbleibenden Elemente sind die ADM-Anordnung 200, die Interferometeranordnung 300 und der zugeordnete HeNe-Laser 301. Analog zur Ausführungsform von Figur 2 werden die Messtrahlen dieser beiden Distanzmesser durch den wellenlängenabhängigen Strahlteiler 320 zusammengeführt respektive getrennt. Der wellenlängenabhängige Strahlteiler 320 ist ebenfalls auf der Zwischeneinheit 2 angeordnet.

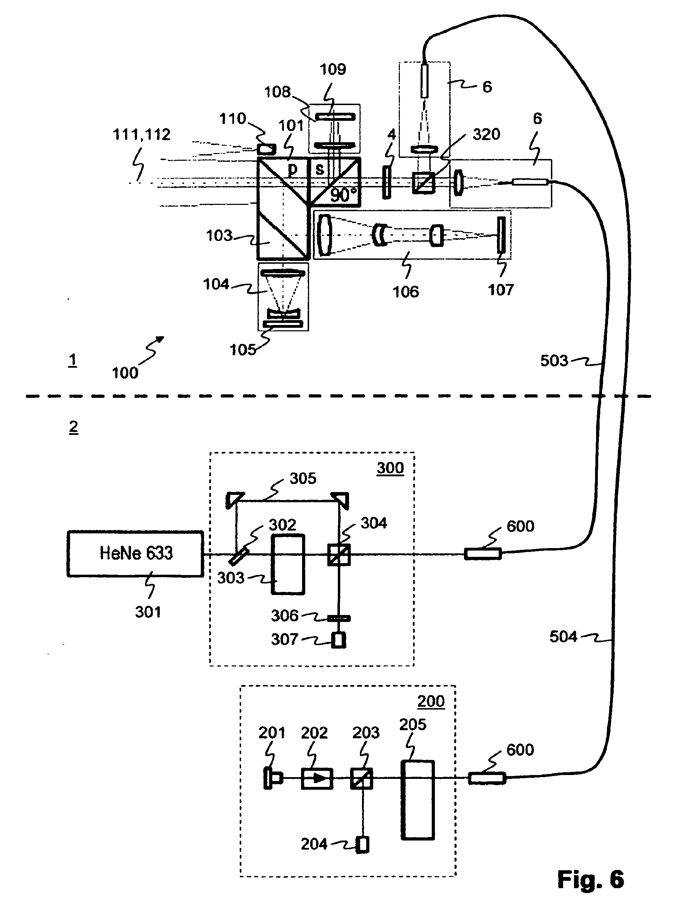

**Figur 6** zeigt eine Anordnung mit über zwei Lichtleitern separierten Distanzmessem. Die Träger-Anordnung 100 ist hier gleich gezeigt wie in der Ausführungsform gemäss **Figur 4****,** und die Reflektionscharakteristik von darin eingesetzten Auskopplungen 101, 102, 103 ist auch dieselbe. Es könnten alternativ jedoch in beiden Ausführungsformen alternativ die Elemente auch biaxial angeordnet sein. Die Auftrennung der ankommenden Lichtstrahlen durch den wellenlängenabhängigen Strahlteiler 320 geschieht hier, nach der Viertelwellenplatte 4, in der Sende-Empfangseinheit 1. Die aufgeteilten Strahlen für die beiden Distanzmesser 200, 300 werden über jeweils eigene polarisationserhaltende Lichtleiter 503, 504 zu der Zwischeneinheit 2 geführt. Die ADM-Anordnung 200, die Interferometeranordnung 300 und der HeNe-Laser 301 sind auf der Zwischeneinheit 2 und mit dieser bewegbar angeordnet. In einer Variante dieser Ausführungsform ist die ADM-Anordnung 200 oder ist der HeNe-Laser 301 und optional auch die Interferometeranordnung 300 auf der Basiseinheit 3 angeordnet. Anstelle von Kollimatoren sind in der Sende-Empfangseinheit 1 beispielhaft Strahlformer 6 zur Strahlaufweitung eingesetzt.

Die beiden Lichtleiter 503, 504 werden aus wärmetechnischen Gründen und aus Platzgründen vorzugsweise jeweils einzeln über eine rechte und eine linke Stütze der Sende-Empfangseinheit 1 durch die Zenitachse Z geführt.

In den Ausführungsformen der Figuren 4 und 6 muss die Längenänderung der Lichtleiter 502, 503, 504 durch Erwärmung berücksichtigt werden. Dies geschieht vorzugsweise durch Messen einer Temperatur, beispielsweise der Temperatur im Gerät. In einer bevorzugten Variante der Erfindung ist ein Metalldraht, beispielsweise aus Nickel, parallel und möglichst nahe zu einem Lichtleiter geführt, beispielsweise in der Ummantelung des Lichtleiters. Anhand des elektrischen Widerstandes des Drahtes wird mit einer Widerstandsmesseinrichtung eine mittlere Temperatur des Drahtes ermittelt. Daraus wird automatisch eine mittlere Längenänderung des Lichtleiters bestimmt und zur Korrektur der Distanzmessung verwendet.

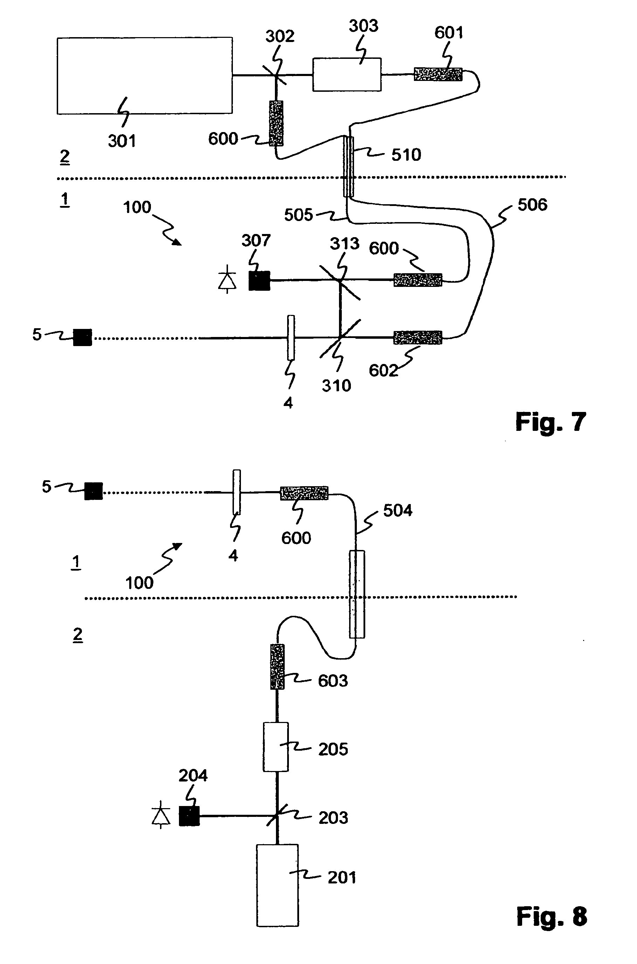

**Figur 7** zeigt eine Anordnung mit einem über zwei Lichtleiter teilweise separierten interferometrischen Distanzmesser. In dieser Anordnung sind der HeNe-Laser 301 und der Akusto-Optische Modulator (AOM) 303 der Interferometeranordnung 300 vom Träger respektive der Sende-Empfangseinheit 1 entfernt und befinden sich auf der Zwischeneinheit 2. Ausgehend vom HeNe-Laser 301 wird der Laserstrahl mit dem Strahlteiler 302 auf einen Messpfad und einen Referenzpfad aufgeteilt, wobei der Referenzpfad den kleineren Anteil der Energie, beispielsweise rund 10% aufweist. Der Referenzpfad führt über einen ersten polarisationserhaltenden Lichtleiter 505, der Messpfad führt über einen akustooptischen Modulator 303 und danach über einen zweiten polarisationserhaltenden Lichtleiter 506. Diese separate Führung von Messpfad und Referenzpfad reduziert den Temperatureinfluss, da beide Pfade zumindest annähernd gleich von Temperaturschwankungen betroffen sind. Dazu sind die beiden Lichtleiter in einer gemeinsamen Führung oder Ummantelung 510 angeordnet. Am Anfang und am Ende der Lichtleiter 505, 506 sind jeweils Kollimatoren 600 zur Zusammenfassung respektive zur Aufweitung der Lichtstrahlen angeordnet. Der Kollimator 601 respektive die Fasereinkopplung beim akustooptischen Modulator 303 wirkt als Filter für die Anteile erster Ordnung, das heisst nur der frequenzverschobene Anteil, wird in den Lichtleiter 506 eingekoppelt. Der Messpfad und der Referenzpfad werden von der Zwischeneinheit aus durch die beiden Lichtleiter 505, 506 zur Sende-Empfangseinheit 1 geführt, wo die Interferenz des Referenzlichtstrahles und des Messlichtstrahles stattfindet. Dazu wird der zurückkehrende Messlichtstrahl durch einen polarisierenden Strahlteiler 310 vom ausgehenden Messlichtstrahl getrennt und zu einem Strahlteiler 313 gerührt. Dieser Strahlteiler 313 überlagert den Messlichtstrahl mit dem Referenzlichtstrahl und führt beide auf den Interferometer-Detektor 307. Die beiden Strahlteiler 310, 313 und der Interferometer-Detektor 307 sind also auf der Sende-Empfangseinheit 1 angeordnet.

Der akustooptische Modulator 303 wirkt als Isolator für reflektierte Messtrahlen, so dass keine zusätzliche Isolation zum Schutz des HeNe-Lasers 301 erforderlich ist. Es ist alternativ auch möglich, das Referenzlicht anstelle des Messlichtes zu modulieren, wobei aber dann im Messlichtpfad ein Isolator angeordnet werden muss.

Der Kollimator 602 weist vorzugsweise eine relativ grosse Brennweite von beispielsweise 18 mm auf und erzeugt damit einen ausreichenden Durchmesser des Messtrahls von beispielsweise 4 - 5 mm. Alternativ ist die Brennweite des Kollimators 602 eine kurze Brennweite von beispielsweise 2 mm, und ist daran anschliessend ein Galileisches Teleskop vor dem Ende des jeweiligen Lichtleiters angeordnet (nicht gesondert gezeichnet), wie in den Ausführungsformen gemäss **Figur 4** und **6****.**

In dieser Ausführungsform der Erfindung sind die wärmeerzeugenden Elemente in der Zwischeneinheit 2 und von den wärmeempfindlichen optischen Elementen in der Sende-Empfangseinheit 1 entfernt.

**Figur 8** zeigt eine Anordnung mit einem über einen Lichtleiter separierten Absolutdistanzmesser. Auf der Sende-Empfangseinheit 1 ist lediglich die Viertelwellenplatte 4 und ein Kollimator 600 für den Lichtleiter 504 angeordnet. Die Anordnung der Viertelwellenplatte 4 auf der Sende-Empfangseinheit 1 dient dazu, unterschiedliche Phasenverzögerungen im Lichtleiter 504 zu kompensieren: Beim austretenden Strahl sind zueinander orthogonale Komponenten des Laserstrahls einer unterschiedlichen und unbekannten Verzögerung unterworfen. Nach der Phasenschiebung von 90°, das heisst nach der Umwandlung in zirkulär polarisiertes Licht durch die Viertelwellenplatte 4, Reflektion durch das Ziel 5 und der erneuten Phasenschiebung durch die Viertelwellenplatte 4 sind die Komponenten um 90 Grad verdreht, also bezüglich der Hauptachsen des Lichtleiters 504 gegeneinander vertauscht. Jede Komponente erfährt somit auf dem Rückweg die Verzögerung, welche die andere Komponente auf dem Hinweg erfahren hat. Dadurch sind Unterschiede in der Verzögerung kompensiert. Damit die Kompensation optimal wirkt, sind beim Kollimator 603 die Polarisationsachsen des Lichtleiters 504 auf die Polarisationsachsen des elektrooptischen Modulators 205 ausgerichtet, also parallel zu diesen.

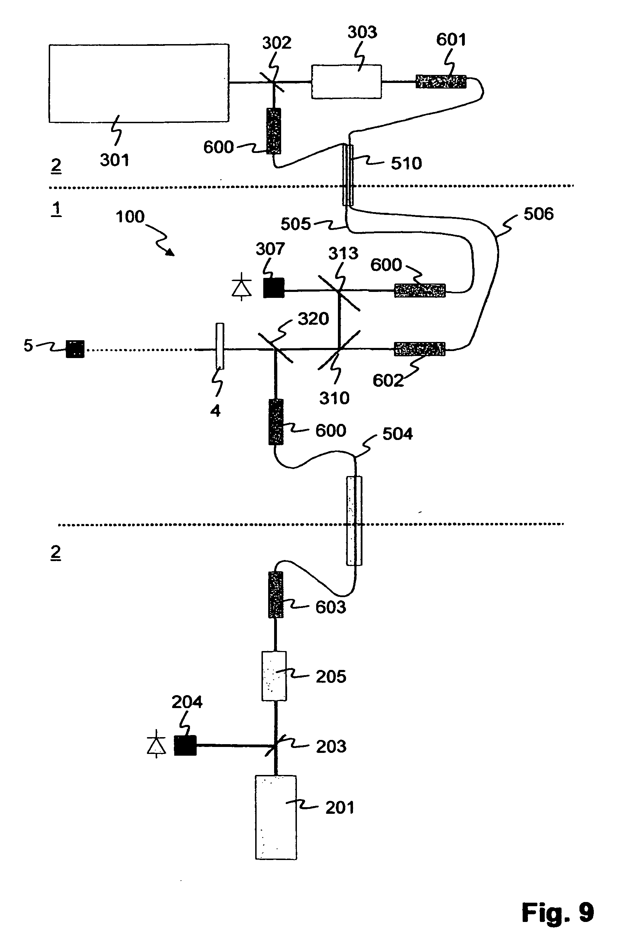

**Figur 9** zeigt eine Kombination der Anordnungen aus den Figuren 7 und 8. Die Messtrahlen der ADM-Anordnung 200 und der Interferometeranordnung 300 werden in der Sende-Empfangseinheit 1 durch einen wellenlängenabhängigen Strahlteiler 320 überlagert respektive voneinander getrennt. Die Viertelwellenplatte 4 ist auf die ADM-Messung optimiert und gleichzeitig auf minimalen Einfluss und Verluste für die Interferometermessung ausgelegt. Die Messlichtstrahlen der beiden Distanzmesser werden somit getrennt über eigene Lichtleiter 504, 505, 506 zu respektive von der Zwischeneinheit 2 gerührt. Vorzugsweise sind dabei der Lichtleiter 504 der ADM-Anordnung 200 über eine erste Stütze 21 und die Lichtleiter 505, 506 der Interferometeranordnung 300 über die zweite Stütze 22 geführt. Diese separate Führung erlaubt, einzelne Komponenten der beiden Distanzmesser separat in den beiden Stützen 21, 22 anzuordnen. In einer anderen Variante dieser Ausführungsform sind die Elemente der ADM-Anordnung 200 oder die Elemente der Interferometeranordnung 300, welche in der Figur 9 in der Zwischeneinheit 2 angeordnet sind, statt dessen in der Basiseinheit 3 angeordnet.

Die Menge der optischen Komponenten in der Sende-Empfangseinheit 1 ist hiermit möglichst klein gehalten und es sind insbesondere Wärmequellen in der Zwischeneinheit 2 angeordnet und nicht in der Sende-Empfangseinheit 1.

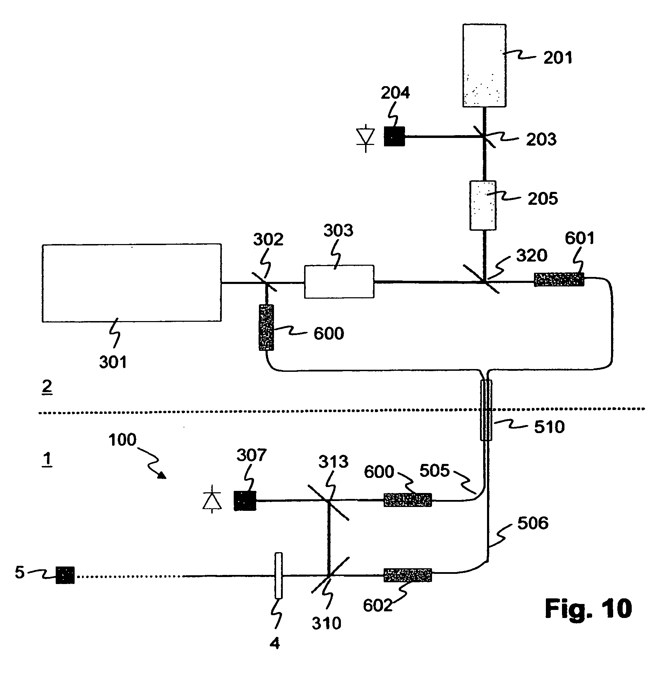

**Figur 10** zeigt eine Kombination der Anordnungen aus den Figuren 7 und 8 mit mehrfacher Nutzung eines der Lichtleiter. Der von der ADM-Anordnung 200 erzeugte Messtrahl ist darin in den Messtrahl der Interferometeranordnung 300 eingekoppelt. Vorzugsweise ist diese Einkopplung mit einem wellenlängenabhängigen Strahlteiler 320 zwischen dem akustooptischen Modulator 303 und dem zugeordneten Kollimator 600 angeordnet.

Die Anordnung in der Sende-Empfangseinheit 1 ist strukturell dieselbe wie in der **Figur 7****.** Der polarisierende Strahlteiler 310 in der Sende-Empfangseinheit 1 wirkt nur auf den Wellenlängenbereich des Interferometers, und reflektiert also zumindest einen Teil des rückkehrende Lichtes des Interferometers zum Strahlteiler 313 und damit zum Interferometer-Detektor 307. Der Lichtanteil des ADM wird durch den polarisierenden Strahlteiler 310 im wesentlichen durchgelassen und gelangt durch die selbe Faser 506 und den wellenlängenabhängigen Strahlteiler 320 auf der Zwischeneinheit 2 zur ADM-Anordnung 200. Dieser Lichtleiter 506 hat eine cut-off Wellenlänge für single-mode Propagation, die unterhalb der Wellenlänge des ADM (beispielsweise 780 nm) wie auch des Interferometers (beispielsweise 633 nm) liegt.

Diese Ausführungsform der Erfindung ermöglicht eine hohe Integration von ADM und Interferometer und eine kleine Anzahl von optischen Elementen auf der Sende-Empfangseinheit 1. Es ist kein besonderer Aufwand nötig, um eine gute Überdeckung der Strahlen der beiden Distanzmesser zu erzielen, weil die Strahlen schon vor dem Lichtleiter 506 miteinander kombiniert werden und in der Sende-Empfangseinheit 1 dieselbe Optik durchlaufen.

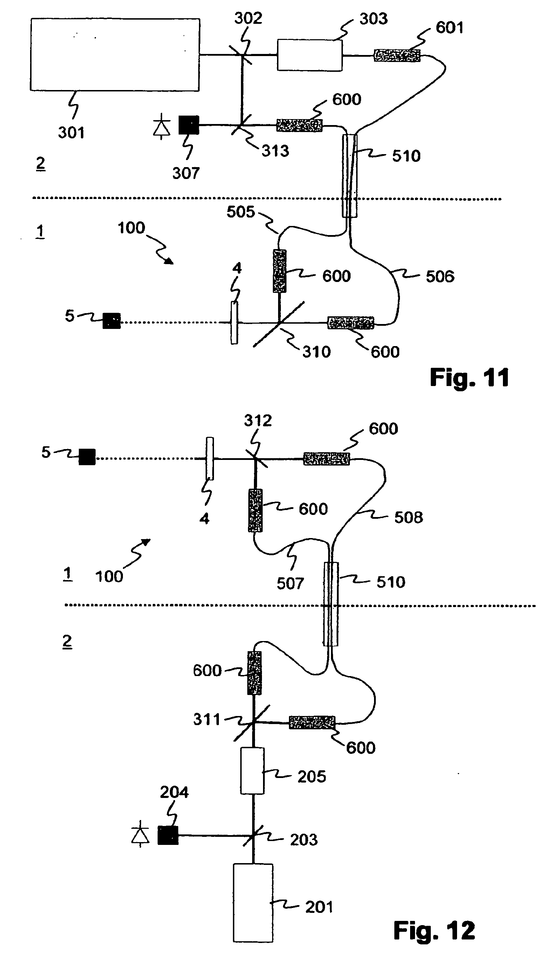

**Figur 11** zeigt eine weitere Anordnung mit einem über zwei Lichtleiter teilweise separierten interferometrischen Distanzmesser. Der Interferometer-Detektor 307 ist hier in der Zwischeneinheit 2 angeordnet, und ebenso der zugeordnete Strahlteiler 313. Somit sind keine elektrischen Komponenten des Interferometers in der Sende-Empfangseinheit 1 angeordnet. Gemeinsame Längenveränderungen der Lichtleiter 505, 506 kompensieren sich aber nicht mehr gegenseitig. Deshalb ist vorzugsweise eine Temperaturmessung und Kompensation eingebaut, beispielsweise wie oben beschrieben mit einem Messdraht parallel zu den Lichtleitern 505, 506.

**Figur 12** zeigt eine Anordnung mit einem über zwei Lichtleiter 507, 508 teilweise separierten Absolutdistanzmesser. Der aus dem elektrooptischen Modulator 205 austretende Strahl wird in einem polarisierenden Strahlteiler 311 auf die Kollimatoren 600 der beiden Lichtleiter 507, 508 aufgeteilt, welche mit ihren Hauptachsen parallel zu den Achsen des polarisierenden Strahlteilers 311 orientiert sind.

In der Sende-Empfangseinheit 1 werden die beiden Komponenten des Strahls in einem weiteren polarisierenden Strahlteiler 312 kombiniert und durch die Viertelwellenplatte 4 abgestrahlt. Das rückkehrende Licht durchläuft abermals die Viertelwellenplatte 4. Jede der Komponenten ist insgesamt um 90 Grad gedreht, und wird durch den weiteren polarisierenden Strahlteiler 312 für den Rückweg jeweils auf den anderen Lichtleiter 507, 508 als beim Hinweg geführt. Eine unterschiedliche Phasenschiebung der Komponenten zwischen den Lichtleitern 507, 508 hat somit keinen Einfluss. Dasselbe gilt für eine unterschiedliche Absorption der Komponenten.

**Figuren 13** und **14** zeigen weitere Anordnungen von Distanzmessern, die in Untereinheiten separiert sind. Dabei sind einzelne der Untereinheiten auch auf der Basiseinheit 3 angeordnet. Dies ist insbesondere für schwere Untereinheiten und/oder Untereinheiten mit relativ hohen Wärmeverlusten von Vorteil. In der Anordnung der **Figur 13** ist der HeNe-Laser 301 in der Basiseinheit 3 angeordnet und über einen Lichtleiter mit der Interferometeranordnung 300 in der Träger-Anordnung 100 verbunden. In der Anordnung der **Figur 14** ist nebst dem HeNe-Laser 301 auch die Interferometeranordnung 300 in der Basiseinheit 3 angeordnet. Die ADM-Anordnung 200 ist in diesen beiden Varianten jeweils in der Zwischeneinheit 2 angeordnet. Die ADM-Anordnung 200 ist strichliert gezeichnet, womit angedeutet ist, dass sie alternativ auch in der Träger-Anordnung 100 angeordnet sein kann.

### BEZUGSZEICHENLISTE

| | |
|---|---|
| A | Azimutachse |
| Z | Zenitachse |
| 1 | Sende-Empfangseinheit |
| 2 | Zwischeneinheit |
| 3 | Basiseinheit |
| 4 | Viertelwellenplatte |
| 5 | Ziel |
| 6 | Strahlformer |
| 7 | Aufweitungsoptik |
| 21 | erste Stütze |
| 22 | zweite Stütze |
| 10 | Messlichtstrahl |
| 100 | Träger-Anordnung |
| 101 | erste Auskopplung |
| 102 | zweite Auskopplung |
| 103 | dritte Auskopplung |
| 104 | Übersichtskamera |
| 105 | Bildwandler der Übersichtskamera 104 |
| 106 | Zoomkamera |
| 107 | Bildwandler der Zoomkamera 106 |
| 108 | Positionswandler |
| 109 | Positionsempfindliche Diode |
| 110 | Reflektorbeleuchtung |
| 111 | optische Achse der Zoomkamera |
| 112 | optische Achse der Distanzmesser |
| 200 | ADM-Anordnung |
| 201 | Laserdiode |
| 202 | Isolator |
| 203 | polarisierender Strahlteiler |
| 204 | ADM-Detektor |
| 205 | Elektrooptischer Modulator |
| 300 | Interferometeranordnung |
| 301 | HeNe-Laser |
| 302 | Strahlteiler |
| 303 | Akustooptischer Modulator |
| 304 | polarisierender Strahlteiler |
| 305 | Referenzlichtpfad |
| 306 | Polarisationsfilter |
| 307 | Interferometer-Detektor |
| 310 - 312 | polarisierender Strahlteiler |
| 313 | Strahlteiler |
| 320 | wellenlängenabhängiger Strahlteiler |
| 321 | Isolator |
| 501 - 508 | Lichtleiter |
| 510 | Doppelfäserfuhrung |
| 600 - 603 | Kollimator |

## Patentansprüche

1. Koordinatenmessgerät, aufweisend
• mindestens eine optische Distanzmessvorrichtung (200, 300),
• Mittel zum Abstrahlen und zum Empfang von Licht,
• eine Basiseinheit
• eine Sende-Empfangseinheit (1), welche bezüglich einer Zwischeneinheit (2) um eine Achse (Z) drehbar angeordnet ist,
• die obengenannte Zwischeneinheit (2), welche bezüglich der Basiseinheit (3) um eine weitere Achse (A) drehbar angeordnet ist, wodurch die Sende-Empfangseinheit (1) bezüglich der Basiseinheit (3) um zwei Achsen (A, Z) drehbar angeordnet ist,
• wobei die optische Distanzmessvorrichtung (200, 300) eine erste Untereinheit aufweist, welche auf der Sende-Empfangseinheit (1) und mit dieser bewegt angeordnet ist,
• wobei die optische Distanzmessvorrichtung (200, 300) eine zweite Untereinheit aufweist, und mindestens ein Lichtleiter (501 - 508) zur Übertragung von Licht zwischen der ersten und der zweiten Untereinheit der Distanzmessvorrichtung angeordnet (200, 300) ist,
**dadurch gekennzeichnet, dass**
• die zweite Untereinheit auf der Zwischeneinheit (2) und mit dieser bewegt angeordnet ist.

2. Koordinatenmessgerät nach Anspruch 1, wobei mindestens ein optoelektronischer Detektor (204, 307) der mindestens einen Distanzmessvorrichtung (200, 300) in der Sende-Empfangseinheit (1) angeordnet ist.

3. Koordinatenmessgerät nach Anspruch 1 oder 2, wobei ein abgestrahlter und ein rückkehrender Lichtstrahl der mindestens einen Distanzmessvorrichtung (200, 300) durch denselben Lichtleiter (501 - 504) zwischen der ersten und der zweiten Untereinheit geführt sind.

4. Koordinatenmessgerät nach Anspruch 1 oder 2, wobei ein abgestrahlter und ein rückkehrender Lichtstrahl der mindestens einen Distanzmessvorrichtung durch getrennte Lichtleiter (505, 506) zwischen der ersten und der zweiten Untereinheit geführt sind.

5. Koordinatenmessgerät nach einem der Ansprüche 1 bis 4, aufweisend eine erste und eine zweite Distanzmessvorrichtung (200, 300), wobei Lichtstrahlen der beiden Distanzmessvorrichtungen jeweils durch getrennte Lichtleiter (503, 504; 505, 506) zwischen der ersten und der zweiten Untereinheit geführt sind.

6. Koordinatenmessgerät nach einem der Ansprüche 1 bis 4, aufweisend eine erste und eine zweite Distanzmessvorrichtung (200, 300) mit jeweils einem abgestrahlten und einem rückkehrenden Lichtstrahl, wobei mindestens einer der Lichtstrahlen der ersten Distanzmessvorrichtung (200) und einer der Lichtstrahlen der zweiten Distanzmessvorrichtung (300) durch denselben Lichtleiter (506) zwischen der ersten und der zweiten Untereinheit geführt sind.

7. Koordinatenmessgerät nach einem der Ansprüche 1 bis 4, aufweisend eine erste und eine zweite Distanzmessvorrichtung (200, 300) mit jeweils einem abgestrahlten und einem rückkehrenden Lichtstrahl, wobei alle Lichtstrahlen der ersten wie auch der zweiten Distanzmessvorrichtung (200, 300) durch denselben Lichtleiter (502) zwischen der ersten und der zweiten Untereinheit geführt sind.

8. Koordinatenmessgerät nach Anspruch 1, wobei eine Lichtquelle (301) in der Zwischeneinheit (2) angeordnet ist, und die übrigen Elemente der mindestens einen Distanzmessvorrichtung (200, 300) in der Sende-Empfangseinheit (1) angeordnet sind.

9. Koordinatenmessgerät nach einem der Ansprüche 1 bis 7, wobei einzelne Untereinheiten der mindestens einen Distanzmessvorrichtung (200, 300) auch auf der Basiseinheit (3) angeordnet sind und über Lichtleiter mit anderen Untereinheiten auf der Zwischeneinheit (2) und/oder der Sende-Empfangseinheit (1) verbunden sind, und insbesondere mindestens eine Lichtquelle (201, 301) auf der Basiseinheit (3) angeordnet ist.

10. Koordinatenmessgerät nach einem der Ansprüche 1 bis 9, wobei in der der Sende-Empfangseinheit (1) eine Viertelwellenplatte (4) im Strahlengang des abgestrahlten wie auch des rückkehrenden Lichtes von mindestens einem der mindestens zwei Distanzmesser (200, 300) angeordnet ist.

11. Koordinatenmessgerät nach einem der Ansprüche 1 bis 10, wobei der mindestens einen Lichtleiter (501 - 508) ein polarisationserhaltender Lichtleiter ist.

## Claims

1. A coordinate measurement apparatus, comprising
• at least one optical distance measurement device (200, 300),
• means for irradiating and for receiving light,
• a base unit,
• an emitter-receiver unit (1) which is rotatably arranged about an axis (Z) with respect to an intermediate unit (2),
• the above mentioned intermediate unit (2) which is rotatably arranged about a further axis (A) with respect to the base unit (3), by which means the emitter-receiver unit (1) is rotatably arranged about two axes (A, Z) with respect to the base unit (3),
• wherein the optical distance measurement device (200, 300) comprises a first sub-unit which is arranged on the emitter-receiver unit (1) and in a manner moved with this,
• wherein the optical distance measurement device (200, 300) comprises a second sub-unit, and at least one optical waveguide (501-508) for transmitting light is arranged between the first and the second sub-unit of the distance measurement device (200, 300),
**characterised in that**
• the second sub-unit is arranged on the intermediate unit (2) and in a manner moved with this.

2. A coordinate measurement apparatus according to claim 1, wherein at least one optoelectronic detector (204, 307) of the at least one distance measurement device (200, 300) is arranged in the emitter-receiver unit (1).

3. A coordinate measurement apparatus according to claim 1 or 2, wherein an emitted and a returning light beam of the at least one distance measurement device (200, 300) are led through the same optical waveguide (501-504) between the first and the second sub-unit.

4. A coordinate measurement apparatus according to claim 1 or 2, wherein an emitted and a returning light beam of the at least one distance measurement device are led through separate optical waveguides (505, 506) between the first and the second sub-unit.

5. A coordinate measurement apparatus according to one of the claims 1 to 4, comprising a first and a second distance measurement device (200, 300), wherein light beams of the two distance measurement devices are led in each case through separate optical waveguides (503, 504; 505,506) between the first and the second sub-unit.

6. A coordinate measurement apparatus according to one of the claims 1 to 4, comprising a first and a second distance measurement device (200, 300) with in each case an emitted and a returning light beam, wherein at least one of the light beams of the first distance measurement device (200) and one of the light beams of the second distance measurement device (300) are led through the same optical waveguide (506) between the first and the second sub-unit.

7. A coordinate measurement apparatus according to one of the claims 1 to 4, comprising a first and a second distance measurement device (200, 300) with in each case an emitted and a returning light beam, wherein all light beams of the first as well as the second distance measurement device (200, 300) are led through the same optical waveguide (502) between the first and the second sub-unit.

8. A coordinate measurement apparatus according to claim 1, wherein a light source (301) is arranged in the intermediate unit (2), and the remaining elements of the at least one distance measurement device (200, 300) are arranged in the emitter-receiver unit (1)

9. A coordinate measurement apparatus according to one of the claims 1 to 7, wherein individual sub-units of the at least one distance measurement device (200, 300) are also arranged on the base unit (3) and are connected via optical waveguides to other sub-units on the intermediate unit (2) and/or emitter-receiver unit (1), and in particular at least one light source is arranged on the base unit (3).

10. A coordinate measurement apparatus according to one of the claims 1 to 9, wherein a quarter-wave plate (4) is arranged in the beam path of the emitted as well as the returning light of at least one of the at least two distance measurement devices (200, 300), in the emitter-receiver unit (1).

11. A coordinate measured apparatus according to one of the claims 1 to 10, wherein the at least one optical waveguide (501, 508) is a polarisation-maintaining optical waveguide.

## Revendications

1. Appareil de mesure de coordonnées présentant :
au moins un dispositif optique (200, 300) de mesure de distance,
des moyens d'émission et de réception de lumière,
une unité de base,
une unité (1) d'émission et de réception disposée de manière à tourner autour d'un axe (Z) par rapport à une unité intermédiaire (2),
ladite unité intermédiaire (2) étant disposée de manière à pouvoir tourner autour d'un autre axe (A) par rapport à l'unité de base (3), grâce à quoi l'unité (1) d'émission et de réception est disposée de manière à pouvoir tourner autour de deux axes (A, Z) par rapport à l'unité de base (3),
le dispositif optique (200, 300) de mesure de distance présentant une première sous-unité disposée sur l'unité (1) d'émission et de réception et déplacée avec cette dernière,
le dispositif optique (200, 300) de mesure de lumière présentant une deuxième sous-unité, au moins un conducteur de lumière (501-508) étant disposé (200, 300) de manière à transmettre la lumière entre la première et la deuxième sous-unité du dispositif de mesure de distance,
**caractérisé en ce que**
la deuxième sous-unité est disposée sur l'unité intermédiaire (2) et est déplacée avec cette dernière.

2. Appareil de mesure de coordonnées selon la revendication 1, dans lequel au moins un détecteur optoélectronique (204, 307) du ou des dispositifs (200, 300) de mesure de distance est disposé dans l'unité (1) d'émission et de réception.

3. Appareil de mesure de coordonnées selon les revendications 1 ou 2, dans lequel un faisceau lumineux émis et un faisceau lumineux de retour du ou des dispositifs (200, 300) de mesure de distance sont guidés entre la première et la deuxième sous-unité par le même conducteur de lumière (501-504).

4. Appareil de mesure de coordonnées selon les revendications 1 ou 2, dans lequel un faisceau lumineux émis et un faisceau lumineux de retour du ou des dispositifs (200, 300) de mesure de distance sont guidés entre la première et la deuxième sous-unité par des conducteurs de lumière (505, 506) séparés.

5. Appareil de mesure de coordonnées selon l'une des revendications 1 à 4, présentant un premier et un deuxième dispositif (200, 300) de mesure de distance, les faisceaux lumineux des deux dispositifs de mesure de distance étant chacun guidés entre la première et la deuxième sous-unité par des conducteurs de lumière (503, 504); 505, 506) séparés.

6. Appareil de mesure de coordonnées selon l'une des revendications 1 à 4, présentant un premier et un deuxième dispositif (200, 300) de mesure de distance qui présentent chacun un faisceau lumineux émis et un faisceau lumineux de retour, au moins l'un des faisceaux lumineux du premier dispositif (200) de mesure de distance et l'un des faisceaux lumineux du deuxième dispositif (300) de mesure de distance étant guidé entre la première et la deuxième sous-unité par le même conducteur de lumière (506).

7. Appareil de mesure de coordonnées selon l'une des revendications 1 à 4, présentant un premier et un deuxième dispositif (200, 300) de mesure de distance qui présentent chacun un faisceau lumineux émis et un faisceau lumineux de retour, tous les faisceaux lumineux du premier ainsi que du deuxième dispositif (200, 300) de mesure de distance étant guidés entre la première et la deuxième sous-unité par le même conducteur de lumière (502).

8. Appareil de mesure de coordonnées selon la revendication 1, dans lequel une source de lumière (301) est disposée dans l'unité intermédiaire (2), les autres éléments du ou des dispositifs (200, 300) de mesure de distance étant disposés dans l'unité (1) d'émission et de réception.

9. Appareil de mesure de coordonnées selon l'une des revendications 1 à 7, dans lequel différentes sous-unités du ou des dispositifs (200, 300) de mesure de distance sont également disposées sur l'unité de base et sont reliées par des conducteurs de lumière à d'autres sous-unités prévues sur l'unité intermédiaire (2) et/ou sur l'unité (1) d'émission et de réception, au moins une source de lumière (201, 301) étant en particulier disposée sur l'unité de base (3).

10. Appareil de mesure de coordonnées selon l'une des revendications 1 à 9, dans lequel une plaque (4) à quart de longueur d'onde est disposée à l'intérieur de l'unité (1) d'émission et de réception dans le parcours des rayons de la lumière émise et de la lumière de retour d'au moins l'un des deux ou plusieurs dispositifs (200, 300) de mesure de distance.

11. Appareil de mesure de coordonnées selon l'une des revendications 1 à 10, dans lequel le ou les conducteurs de lumière (501-508) sont des conducteurs de lumière à maintien de polarisation.
